# EUROPEAN PATENT APPLICATION

(11) **EP 2 299 415 A1**
(43) Date of publication of application: **23.03.2011**
(21) Application number: 10161438.6
(22) Date of filing: 29.04.2010
(51) Int. Cl.: G08B 13/196, G08B 25/08, G08B 29/06, G08B 29/16, H04N 7/18

(54) **Content management in a video surveillance system**

(30) Priority: 18.09.2009 IT MI20091600
(71) Applicant: March Networks Corporation, Ottawa, Ontario K2K 3J1 (CA)
(72) Inventor: Colciago, Fabrizio, 20048, CARATE BRIANZA (MONZA-BRIANZA) (IT)
(74) Representative: Petruzziello, Aldo

(57) **Abstract**

The present disclosure provides a method and system for content management in a video surveillance system. The present disclosure provides content management by which a video management system (VMS) can provide transparent access to video content recorded on edge device storage. The video content access is provided without transferring or copying the video content from the edge device storage to the VMS storage. This access is provided to a client within the VMS framework, without requiring any user intervention to switch or reconfigure connections. The present disclosure also provides a VMS service reflector arranged to reflect services provided by the VMS by having the client establish direct connections to the edge devices when a connection to the VMS is unavailable. The functionality is still provided in the framework of the VMS, and the direct connections are closed when the VMS connection is restored.

## Description

### FIELD

The present disclosure relates generally to video surveillance systems. More particularly, the present disclosure relates to content management in a video surveillance system.

### BACKGROUND

Video surveillance systems are used to keep watch over physical areas to assist in identifying events of interest. Such events, and associated data, can relate to maintaining safety and security, mitigating risk, increasing operational efficiency, preventing loss of products or revenue, gathering business intelligence, and a variety of other applications.

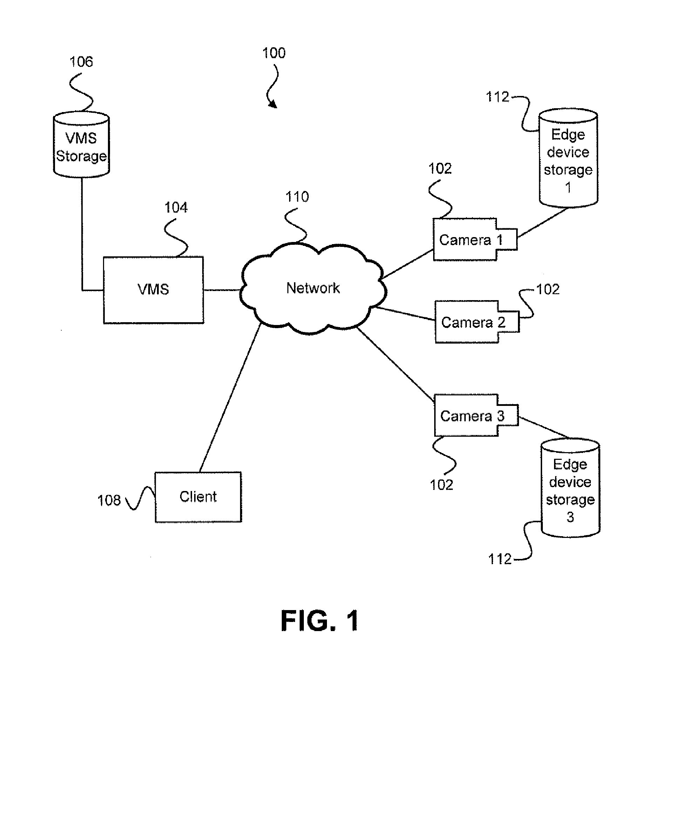

**Figure 1** illustrates a configuration of a conventional internet protocol (IP) video surveillance system **100.** The system includes one or more edge devices **102,** such as cameras or encoders. A video management system (VMS) **104** has associated local storage, or VMS storage **106.** The VMS connects to the camera **102,** starts receiving video from the camera, and records the video on the VMS storage **106.** A client **108** can access video or any other information from the VMS **104,** connecting via a network **110.**

In such a system, if a connection between the VMS **104** and the camera 102 is lost or interrupted, video is not received at the VMS **104** during the time period when the connection to the camera **102** is lost. This results in a gap in the video recording in the portion or sector of the VMS storage **106** associated with that camera.

Some cameras have their own local edge device storage **112.** If the connection between the VMS **104** and the camera **102** is lost or interrupted, the camera **102** can start recording to the associated edge device storage **112.** When the camera **102** re-establishes the connection, the "missing" video can then be transferred from the edge device storage **112** to the VMS storage **106.**

This approach of "filling the gap" of missing video in the VMS storage has a few problems. One problem is that it is difficult to transfer a large amount of "missing" data at the same time as transferring the live video in the surveillance system. The amount of missing data increases depending on the amount of time the connection was lost, and can be about 20-30 GB if the connection is lost for about a day. Also, the connection or "pipe" that connects the camera to the network is typically not very high capacity, and cannot handle the restoration of missing data at the same time as streaming live data, without adversely affecting other system functions.

There is a need for a method and system to improve content management in a video surveillance system.

### BRIEF DESCRIPTION OF THE DRAWINGS

Embodiments will now be described, by way of example only, with reference to the attached Figures, wherein:

**Figure 1** illustrates a configuration of a conventional IP video surveillance system.

**Figure 2** illustrates a block diagram of a video surveillance system according to an embodiment of the present disclosure.

**Figure 3** illustrates a flowchart of a method of implementing content management in a video surveillance system according to an embodiment of the present disclosure.

**Figure 4** illustrates loss of a connection between a VMS and an edge device.

**Figure 5** illustrates an exemplary visual listing of connected storage managed by the VMS according to an embodiment of the present disclosure.

**Figure 6** illustrates a client interface illustrating selection of video stored on a VMS storage according to an embodiment of the present disclosure.

**Figure 7** illustrates a client interface illustrating selection of video stored on an edge device storage according to embodiment of the present disclosure.

**Figure 8** illustrates a client interface illustrating selection of an integrated reflected video storage source according to embodiment of the present disclosure.

**Figure 9** illustrates content management in a video surveillance system in response to unavailability of a VMS according to an embodiment of the present disclosure.

**Figure 10** illustrates a flowchart of a method of implementing content management in a video surveillance system according to another embodiment of the present disclosure.

### DETAILED DESCRIPTION

Generally, the present disclosure provides a method and system for content management in a video surveillance system. The present disclosure provides content management by which a video management system (VMS) can provide transparent access to video content recorded on edge device storage. The video content access is provided without transferring or copying the video content from the edge device storage to the VMS storage. This access is provided to a client within the VMS framework, without requiring any user intervention to switch or reconfigure connections. The present disclosure also provides fault tolerance in the case where a client connection is lost between the VMS and the client. In that case, the client can establish direct connections to the edge devices until the VMS connection is restored. The functionality is still provided in the framework of the VMS, and the direct connections are closed when the VMS connection is restored.

In a first aspect, there is provided a video surveillance system. The system comprises a plurality of edge devices, a virtual management server (VMS), a VMS storage, and a video content reflector. The VMS is in communication with the plurality of edge devices, and the VMS storage is in communication with the VMS and provides local storage to the VMS. The VMS is arranged to record, in the VMS storage, video captured at a selected on of the edge devices. The video content reflector is arranged to provide, to a client, transparent access via the VMS to video content on the selected edge device storage without transferring the video content from the selected edge device storage to the VMS storage. The system can also include a VMS service reflector, in communication with the client and with the VMS and with the plurality of edge devices, that is arranged to reflect, to the client, services provided by the VMS when the VMS is unavailable. Such VMS service reflection can be performed by way of direct connection to the plurality of edge devices. The VMS service reflector can be integral with the client.

The video content reflector can be integral with the VMS or one of the edge devices. The video content reflector can also be arranged to provide transparent access to the video content on the selected edge device storage via a VMS interface associated with the VMS. The video content reflector can be a primary video content reflector, and can further comprise a secondary video content reflector arranged to provide, to the client, transparent access via the VMS to video content on the selected edge device storage without transferring the video content from the selected edge device storage to the VMS storage and in the case of failure of the primary video content reflector.

If a VMS service reflector is included, it can include a configuration information extractor arranged to obtain configuration information from the VMS regarding the plurality of edge devices managed by the VMS, and a client connection manager arranged to transparently connect the client directly to the plurality of edge devices based on the obtained configuration information. The client connection manager can transparently connect the client directly to the plurality of edge devices based on the obtained configuration information in response to receipt of an indication of a loss of a connection along a VMS-client connection path. The VMS service reflector, for the duration of unavailability of the VMS, can be arranged to provide VMS functionality through the existing VMS interface via the direct edge device connections in a manner that is transparent to the client, to disconnect the direct edge device connections in response to receiving an indication of re-establishment of the client connection, and to maintain the VMS functionality transparently to the client through the loss and re-establishment of the client connection.

In a further aspect, there is provided a method of implementing content management in a video surveillance system, the system including a video management server (VMS) having VMS storage, a plurality of edge devices each having associated therewith an edge device storage, and a client. The method, which can be implemented as statements and instructions stored on a computer-readable medium for execution by a processor, comprises recording video captured at a selected edge device in the plurality of edge devices on a the VMS storage; recording video captured at the selected edge device on a selected edge device storage, the selected edge device storage being associated with the selected edge device; and providing, to the client, transparent access via the VMS to video content of the selected edge device storage without transferring the video content from the edge device storage to the VMS storage. The method can also comprise obtaining, at the client, configuration information from the VMS regarding the plurality of edge devices managed by the VMS; receiving an indication of a loss of a client connection along a connection path between the VMS and the client; in response to the received indication of the loss of the client connection, transparently connecting the client directly to the plurality of edge devices based on the obtained configuration information; for the duration of the loss of the client connection, providing VMS service reflection through an existing VMS interface via the direct edge device connections in a manner that is transparent to the client; disconnecting the direct edge device connections in response to receiving an indication of re-establishment of the client connection; and maintaining the VMS functionality transparently to the client through the loss and re-establishment of the client connection.

In yet another aspect, there is provided a method of implementing content management in a video surveillance system, the system including a video management server (VMS) having VMS storage, a plurality of edge devices each having associated therewith an edge device storage, and a client. The method, which can be implemented as statements and instructions stored on a computer-readable medium for execution by a processor, comprises obtaining, at the client, configuration information from the VMS regarding the plurality of edge devices managed by the VMS; transparently connecting the client directly to the plurality of edge devices based on the obtained configuration information; providing VMS service reflection through an existing VMS interface via the direct edge device connections in a manner that is transparent to the client; and maintaining the VMS functionality transparently to the client through the loss and re-establishment of the client connection.

Discussing the present disclosure in general, in an embodiment, a camera, or edge device, has integrated storage, also referred to as edge device storage. In the present disclosure, instances where the term "camera" is used are to be understood as applying equally to other types of edge devices. The camera can record locally on the storage in accordance with a particular recording policy, such as based on motion detection, in response to a received alarm, or constant recording.

In a shadow archiving system according to an embodiment of the present disclosure, the VMS assigns the edge device storage to have as a shadow storage function. The shadow storage can be seen using the VMS, and can be made available to the client without adding or copying the contents of the edge device storage to the local VMS storage.

When a client wants to access a camera feed, the client can receive a live stream from the camera via the VMS. When the client wants to view the playback of the camera, the client can access a playback window showing the timeline. The playback is obtained from the VMS, and video content can be provided through the VMS from the VMS storage or from the edge device storage.

Embodiments of the present disclosure enable the client to access the video stored on the edge device storage, which is reflected by the VMS. The term "reflect" as used herein means that the VMS is making the edge device storage available transparently to the client, just as any other VMS storage element or sector.

For example, the edge device storage is reflected by the VMS when it is made available to the client via the VMS without adding or copying the contents of the edge device storage to the local VMS storage, and in a manner that is transparent to the client.

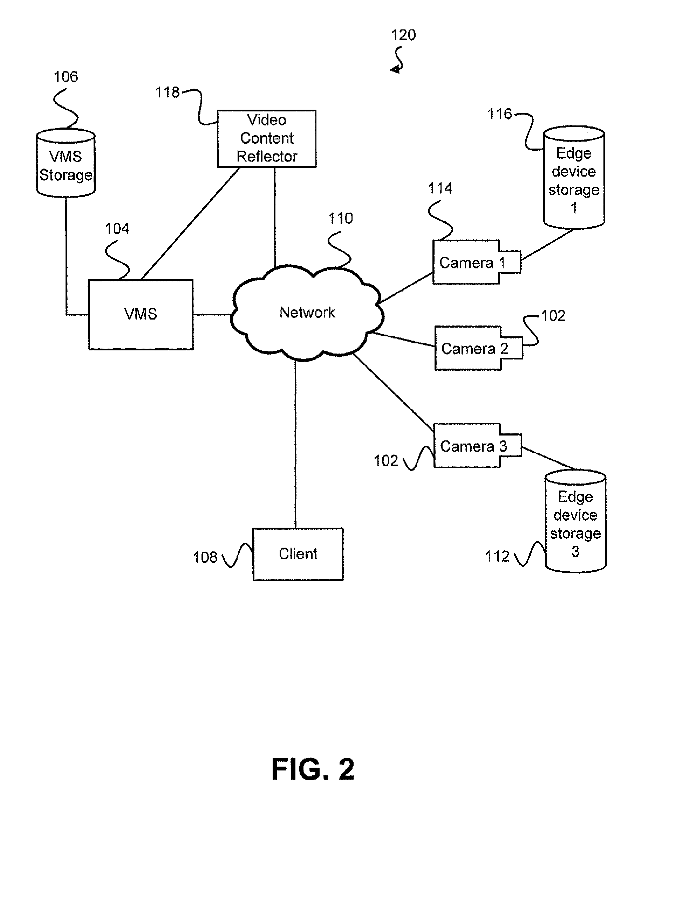

**Figure 2** illustrates a block diagram of a video surveillance system **120** according to an embodiment of the present disclosure. The video surveillance system **120** includes a plurality of edge devices **102,** and a virtual management server (VMS) **104** in communication with the plurality of edge devices **102,** such as via a network **110.** A VMS storage **106,** in communication with the VMS **104,** provides local storage to the VMS **104.** The VMS **104** is arranged to record, in the VMS storage **106,** video captured at a selected edge device **114,** the selected edge device **114** being in the plurality of edge devices **102.** A selected edge device storage **116** is associated with the selected edge device **114.** The selected edge device **114** is configured to record, on the selected edge device storage **116,** video captured at the selected edge device **114.**

A video content reflector **118** is arranged to provide, to a client **108,** transparent access via the VMS **104** to content on the selected edge device storage **116** without transferring the content from the selected edge device storage **116** to the VMS storage **106.** As shown in **Figure 2****,** the video content reflector **118** can provide access to the video from the selected edge device storage **116** via a connection to the network **110,** or any other suitable connection to the selected edge device storage **116.**

In the embodiment shown in **Figure 2****,** the video content reflector **118** is shown to be in communication with the network **110** and the VMS **104.** The video content reflector **118** is also in communication with the selected edge device storage **116,** such as via the network **110,** and can also be in communication with each edge device storage **112** in the system.

In an embodiment, the video content reflector **118** can be provided within the VMS **104** such that it is integral therewith. In another embodiment, the video content reflector can be provided within the selected edge device **114,** or within any one of the plurality of edge devices **102.** In a further embodiment, a secondary video content reflector can be provided in addition to the video content reflector described above, for the purposes of redundancy or backup in the case of failure of the video content reflector itself. The secondary video content reflector is substantially similar in functionality and can be provided in a location that is distinct from the location of the video content reflector, or at the same location. For example, the secondary video content reflector can be arranged to provide, to the client, transparent access via the VMS to video content on the selected edge device storage without transferring the video content from the selected edge device storage to the VMS storage and in the case of failure of the primary video content reflector.

In another embodiment, a camera captures video and sends the video to a micro-encoder (not shown), which sends the video to the network. The micro-encoder can compress received analog video, perform other functionality, and forward the video to the network. The video content reflector **118** can be provided within the micro-encoder. Alternatively, the video content reflector **118** can be provided within the camera, or other types of edge devices.

The system **120** therefore can store video from the selected edge device **114** at the VMS storage **106,** and at the same time store the same video at the associated edge device storage **116**. This provides an inherent backup of the video in the case of a failure or loss of connection in the system. It also enables the video on the associated edge device storage **116** to be seamlessly reflected via the VMS **104,** without transferring, adding or copying the video from the selected edge device storage **116** to the VMS storage **106.** The edge device **114** can be described as being "network aware" and essentially can operate as a VMS in its own right.

The playback of the video from the server is seamless from the shadow archive, or edge device storage, and is transparent to the user. It is a way to reflect the storage of the edge devices to the client, going through the server, so that the client does not see any difference. For example, the shadow archive can be a directory that maps the video of all onboard edge device storage to a central VMS and is accessible via client software. That is, it forms a "shadow" on the central VMS archive of all the video data available on IP cameras and encoders with onboard storage or a direct NAS connection. It is as if the client was connected to the server the whole time. This is an example of a continuous recording policy according to which the camera continuously records on the edge device storage, at the same time that the recording is sent to the VMS storage.

As mentioned earlier, the camera can record locally on the storage in accordance with another recording policy, such as based on motion detection, or in response to a received alarm. In an implementation, the video content reflector **118** can be configured to receive an indication of a loss of connection along the connection path between the VMS and the selected edge device, and to, for the duration of the loss of connection, record video captured at the selected edge device on the selected edge device storage in response to the received indication. The video content reflector **118** can also be arranged to, in response to receipt of an indication of re-establishment of connection along the connection path between the VMS and the selected edge device, provide, to the client, transparent access via the VMS to content of the selected edge device storage captured for the duration of the loss of connection without transferring video from the edge device storage to the VMS storage.

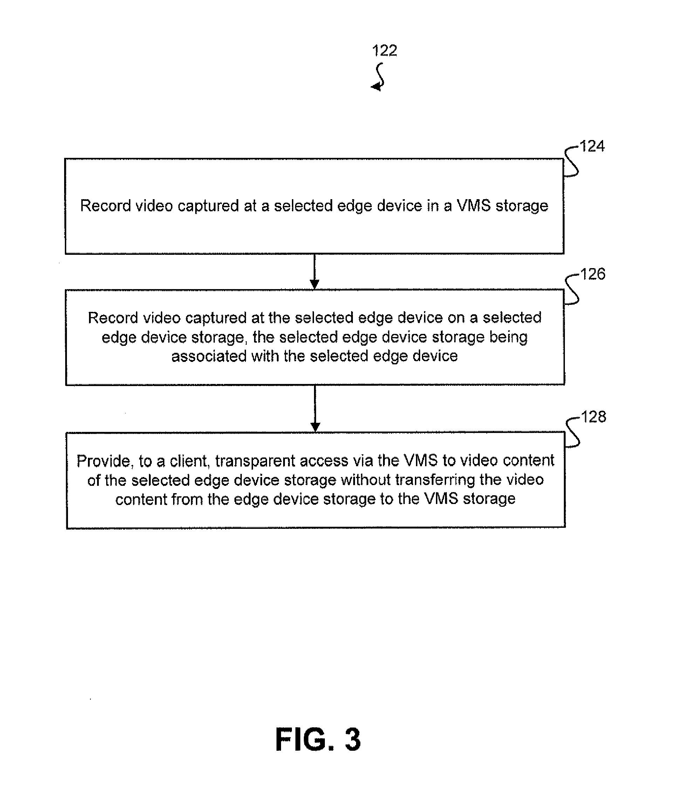

**Figure 3** illustrates a flowchart of a method **122** of implementing content management in a video surveillance system according to an embodiment of the present disclosure. The video surveillance system includes a VMS having VMS storage, a plurality of edge devices each having associated therewith an edge device storage, and a client. The method includes the following: recording video captured at a selected edge device in the plurality of edge devices on the VMS storage (step **124);** recording video captured at the selected edge device on a selected edge device storage, the selected edge device storage being associated with the selected edge device (step **126);** and providing, to the client, transparent access via the VMS to content of the selected edge device storage without transferring video from the edge device storage to the VMS storage (step **128).**

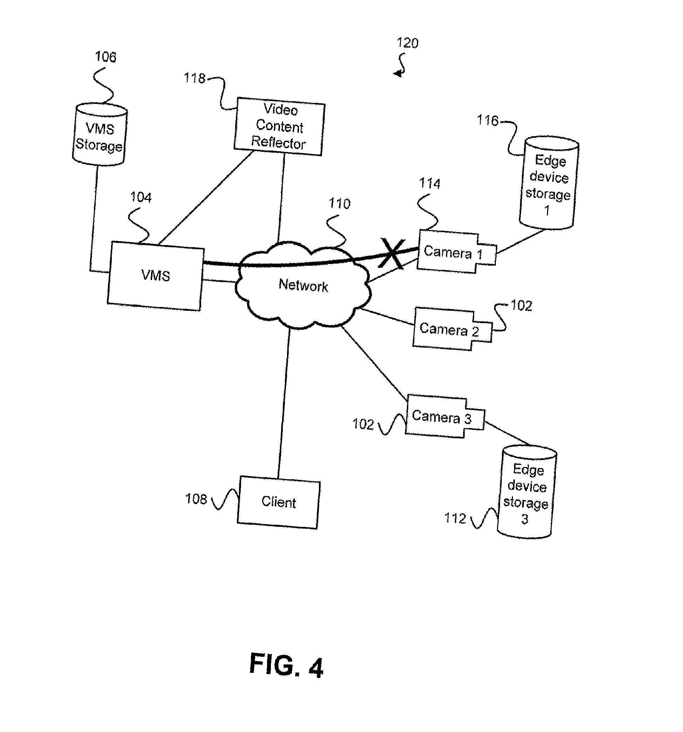

**Figure 4** illustrates loss of a connection between the VMS **104** and an edge device, such as a selected edge device **114.** The loss of connection can occur at any point on the connection path between the VMS and the edge device. When the VMS connection to the selected edge device **114** is interrupted, the client **108** would typically lose the live video feed from the camera. However, according to embodiments of the present disclosure, the video content reflector **118** is arranged to provide, to the client **108,** transparent access via the VMS **104** to content on the selected edge device storage **116** without transferring the content from the selected edge device storage **116** to the VMS storage **106,** even in the case of a loss of connection between the VMS **104** and the selected edge device **114.**

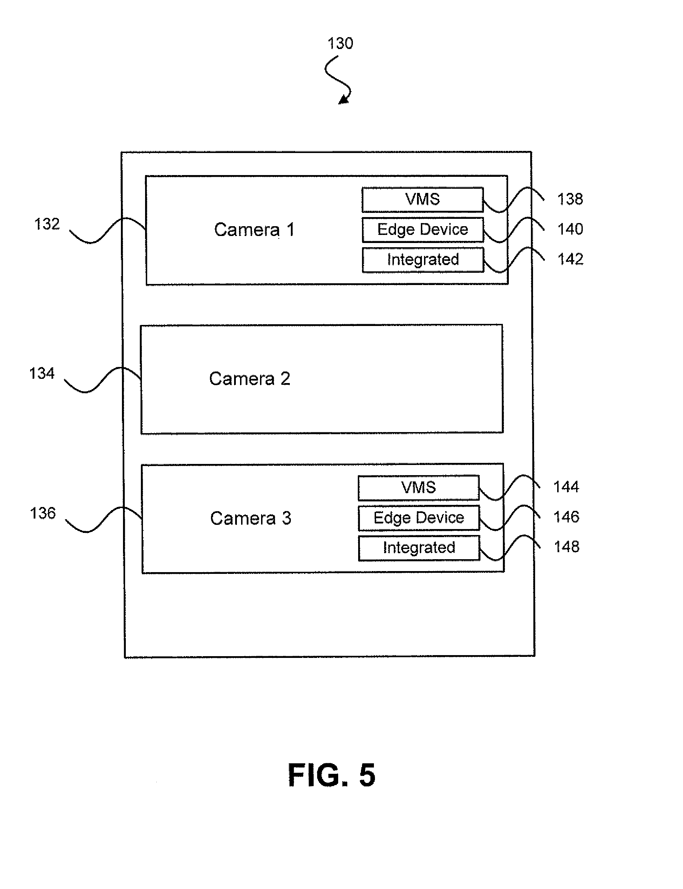

**Figure 5** illustrates an exemplary visual listing **130** of connected storage managed by the VMS **104,** such as can be provided in a graphical user interface. One of the functions of embodiments of the present disclosure is to reflect the edge device storage to the VMS, or via the VMS. A camera 1 selection area **132** provides the ability for a user or client to select or request access, via the VMS **104,** to video content from camera 1. Similarly, camera 2 and 3 selection areas **134** and **136** provide access via the VMS **104** to video content from cameras 2 and 3, respectively. The VMS **104** can provide access to a plurality of video sectors, such as from a plurality of edge devices.

In an embodiment, video content from an integrated video sector for camera 1 is provided in response to user or client selection of the camera 1 selection area **132.** The integrated video sector permits the user to select uninterrupted content viewed by camera 1, whether it is directly from the VMS storage **106,** or reflected from the edge device storage associated with camera 1, in a manner that is transparent to the client. The integrated sector integrates local storage and reflected shadow storage, in accordance with an embodiment of the present disclosure.

As shown in **Figure 5****,** within the camera 1 selection area **132,** further selections can be provided, such as providing access to individual video sectors relating to recording at camera 1, rather than the integrated sector, or reflected sector. A VMS storage sector selector **138** permits the user to select only the content at the VMS storage **106.** An edge device storage sector selector **140** permits the user to select only the content at the edge device storage associated with camera 1. An integrated sector selector **142** can also be separately provided, or can alternatively be omitted in the case where selection of any area of the camera 1 selection area **132** other than the VMS storage sector selector **138** and edge device storage sector selector **140** are equivalent to selection of the integrated sector.

The camera 2 selection area **134** in this example does not include further selections, since there is no edge device storage associated with camera 2 as shown in **Figure 2****,** so only video from the VMS storage **106** is available. The camera 3 selection area **136** and related VMS sector selector **144,** edge device storage sector selector **146** and integrated sector selector **148** are similar to the previously-described camera 1 selection area **132,** VMS sector selector **138,** edge device storage sector selector **140** and integrated sector selector **142.**

In an example, suppose a client wants to see a video from the shadow sector. The client sends a request to the VMS to access the shadow sector, or edge device storage sector, for camera 1. This request can be generated in response to selection of the edge device storage selector **132.** The VMS obtains the video from the edge device storage and will reflect, or playback, the video to the client. The request and provision of video is made through the VMS and its interface, without copying or moving the video to VMS storage.

As shown in **Figure 5****,** the cameras to which the VMS is connected can be displayed in a list showing all of the storage managed by the VMS. If a connection to a camera is broken or lost, the client will detect that the VMS is down. The client can then automatically connect directly to all of the resources that support shadow archiving for the time period where the VMS connection was broken. The system can then work even without the VMS, by providing a user with access to the VMS storage and the edge device storage.

For example, referring back to **Figure 4****,** suppose a connection between the VMS **104** and camera 1 **114** is broken for a particular time period. If the user requests to view a video from camera 1 **114** for the particular time period, the video content reflector **118** will automatically connect the client directly to the camera 1 edge device storage **116** and will enable a user to view video from the shadow archive, or edge device storage, at camera 1. This is done in a way that is transparent to the user.

The system according to an embodiment of the present disclosure allows a client **108** to connect to the VMS **104** to view the local VMS storage **106,** and also transparently view any or all remote storage **112** mounted on edge devices **102** as if it were all stored in a single large virtual storage module.

An advantage is that the client does not need to connect separately and directly to the camera to see the contents of the storage at the camera. The VMS can also automatically determine which cameras have edge device storage, can automatically establish a connection to the edge device storage as a shadow archive, and can automatically list the edge device storage as storage available via the VMS.

Using the approach of an embodiment of the present disclosure, the interface to the end user is transparent, and no additional connection initiation or request on the part of the client is required. In contrast, some other approaches exist where a web window is opened in which the camera video can be viewed, but this is done outside of the VMS and requires user or client establishment of a direct connection to the camera. This requires knowledge of the camera configuration information.

A system and method according to an embodiment of the present disclosure provide access to video content in both VMS storage and in edge device storage. The system can automatically provide the client with access to the edge device storage, without requiring any user configuration or interaction. This is particularly beneficial in situations where the VMS storage is empty with respect to stored video for a requested time period. For example, the edge device storage video can be shown as the default video in a playback window in response to a determination that the VMS storage is empty for a requested video playback period.

The system records video to the VMS storage, and at the same time it is also reflecting a shadow sector. The recording showing up on the timeline is not actually happening at the server, it is happening at the camera itself, when connection between the VMS and the camera is lost. When the server is disconnected, then reconnected, the video recorded on the camera during the network outage is reflected at the server (without copying) when the connection is re-established.

According to am embodiment of the present disclosure, the client sees a reflection of the shadow storage in the VMS and is able to view the camera video through the VMS for a requested time period, even if the VMS had lost its connection to the camera during the requested time period. This is accomplished without copying the data from the edge device storage to the VMS storage. In an embodiment, the shadow storage appearing in the VMS in relation to a selected edge device is always reflecting what is stored in the selected edge device storage.

An approach according to an embodiment of the present disclosure is particularly advantageous when a camera is disconnected for a long time, for example for an entire day. If the system were then to attempt to "fill the gap", it will be difficult to transfer this large amount of data, such as 20-30 GB, at the same time as transferring the live video in the surveillance system. Also, the "pipe" that connects the camera to the network is typically not very high capacity.

The VMS **104** according to an embodiment of the present disclosure manages a plurality of storage locations, by way of the video content reflector **118.** The plurality of storage locations include VMS storage **106** associated with the VMS, and edge device storage **112** associated with each edge device supporting shadow archiving. The VMS **104** can provide a user transparent access to the edge device storage for any time period, whether or not there was an active connection between the VMS and the edge device during that time period. The VMS can also provide transparent access to a live video feed as recorded and stored in the edge device storage.

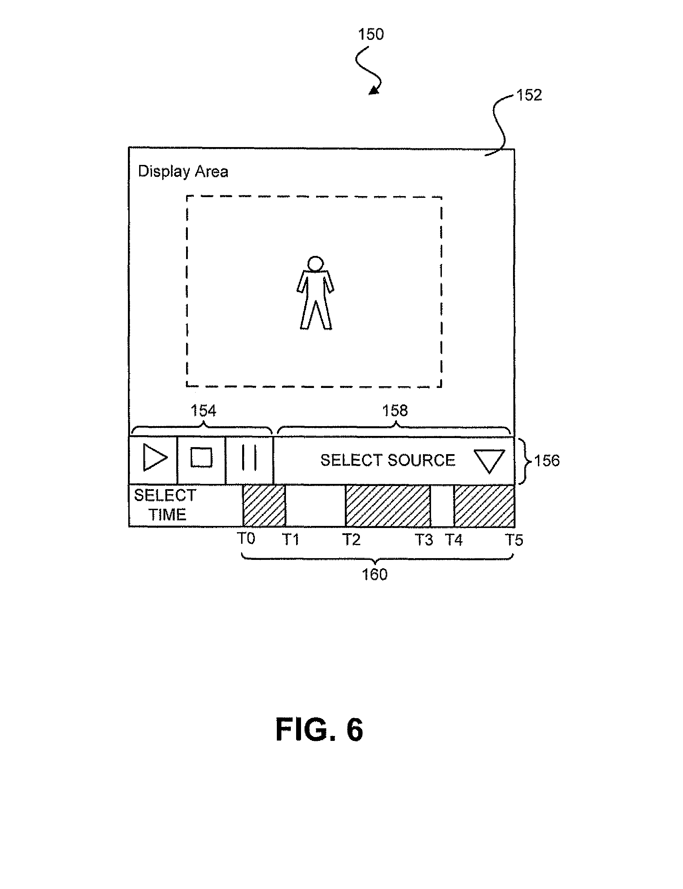

**Figure 6** illustrates a client interface **150,** such as a window, illustrating selection of video stored on a VMS storage **106** according to an embodiment of the present disclosure. **Figure 6** can be described as an exemplary client user interface for use with embodiments of the present disclosure. The illustrated client interface is an example only, and other interfaces, as will be apparent to those of skill in the art, can be substituted. The user window can include: a video display area **152;** playback controls **154;** a video recording timeline **156** indicating where recording is present and where recording is absent; and a video source selector **158** permitting selection between available sectors. Visual indications on the timeline **156** change to reflect video present on the selected video source sector during the displayed time periods.

As used herein, the term "sector" refers to a part of a database. In the VMS, different sectors can be configured, the sectors being part of a virtual database in which video data can be recorded according to a policy or certain criteria. Different policies or criteria can be applied to each sector. Different edge devices, such as cameras, can be assigned to, or associated with, each sector. The sector is therefore considered to be a portion of memory, similar to a sector on a hard disk drive of a personal computer.

Different sectors can be configured to record or capture video according to different policies, or from different video sources, or both. For example, the VMS sector can be configured for continuous trigger video capture, while the shadow archive can be configured for video capture only in response to motion detection. The shadow archive is storage from the edge device that is reflected through the VMS and presented to the client.

The user can select a particular sector to appear in the playback window, if there is more than one sector for the camera. For example: in a first sector, video can be recorded in response to motion detection; in a second sector, video can be recorded continuously; in a third sector, video can be recorded at a lower resolution. If video is only present in the shadow sector for a selected time period, or in association with other selected criteria, the shadow sector can be automatically selected and displayed in the playback window.

If more than one storage is available, the user may select the shadow storage using the storage selector, this being done after the shadow storage is automatically connected and configured in a manner that is transparent to the user.

In a user video management window, a video source selector, or video sector selector, is provided to permit the user to select either the standard VMS storage sector, or the edge device storage sector. For example, sector 1 can be the sector configured in the VMS server, while sector 2 is the shadow archive on the edge device storage. In an example embodiment, the client can include a video storage selector.

In the example of **Figure 6****,** VMS storage content **160** is provided in the timeline **156** in response to selection of the VMS storage sector. Visual indications of gaps in the video recording between times T1 and T2, and between T3 and T4 indicate a loss of connection between the VMS and the camera or edge device for that sector.

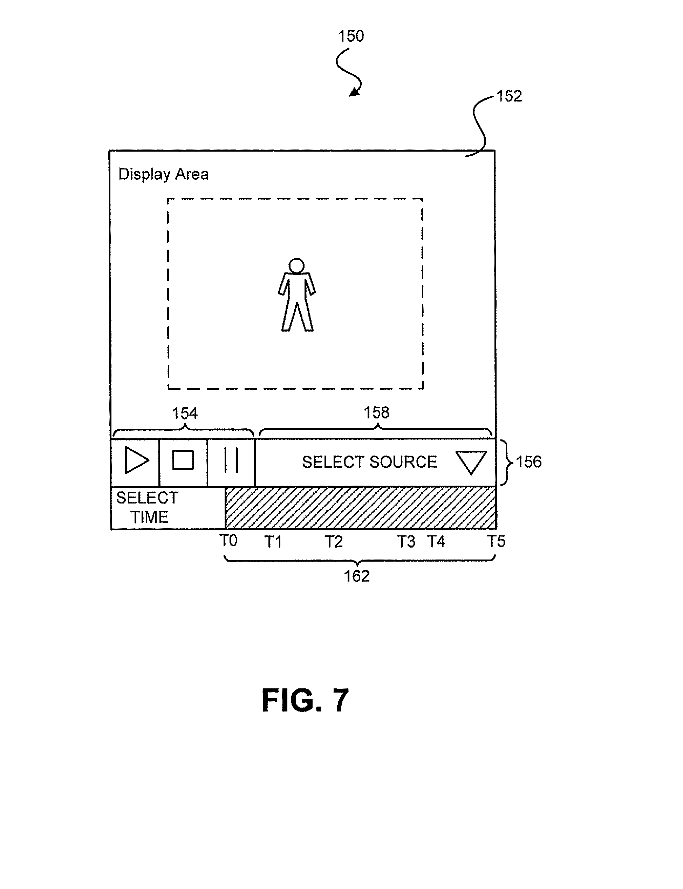

**Figure 7** illustrates a client interface illustrating selection of video stored on an edge device storage according to embodiment of the present disclosure. Suppose a user is viewing playback video from the VMS storage, such as illustrated in Figure 6, and an area without video recording is encountered. The user, by way of the video storage selector **158,** can select the shadow storage for the time period during while the VMS storage has no video. This is provided through the video storage selector **158,** or video sector selector, without requiring the user to establish any additional connections or require any knowledge of configuration parameters of the edge device. The fact that the shadow sector is made to be an available selection in the VMS is performed in a manner that is transparent to the user, as described earlier. In the example of Figure 7, edge device storage content **162** is provided in the timeline **156** in response to selection of the edge device storage sector.

In an embodiment, the playback window can automatically switch the currently played video from the VMS storage sector display of Figure **6** to a shadow storage sector display as shown in Figure **7** for any time period in which the VMS storage sector has no recording. At the end of the time period of no recording, the display can return to that shown in Figure **6** of the VMS sector.

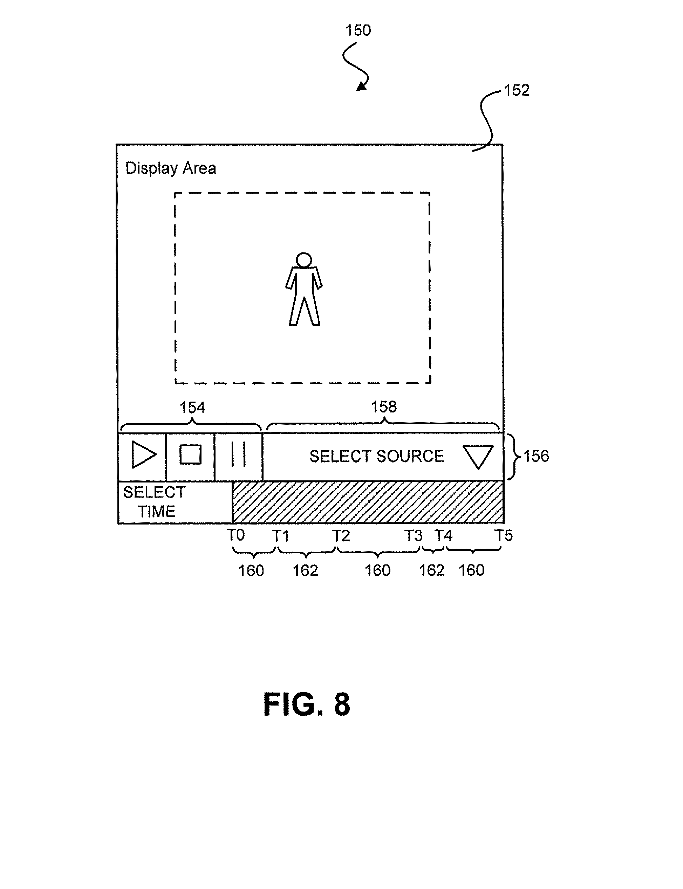

Figure **8** illustrates a client interface illustrating selection of an integrated reflected video storage source according to embodiment of the present disclosure. As mentioned earlier, an integrated video sector permits the user to select uninterrupted content viewed by a camera, whether the video is directly from the VMS storage, or reflected from the edge device storage associated with the camera, in a manner that is transparent to the client. The integrated sector integrates local storage and reflected shadow storage, in accordance with an embodiment of the present disclosure. In the example of Figure **8****,** VMS storage content **160** is provided between times T0 and T1, T2 and T3, and T4 and T5. Edge device storage content **162** is provided in the timeline **156** between times T1 and T2, and between times T3 and T4, since there was a loss of connection between the VMS and the camera or edge device for that sector.

In the example illustrated in relation to Figure **4****,** and discussed thereafter, when the connection between the VMS **104** and a selected edge device **114** is lost, the video content reflector **118** transparently provides access to the selected edge device storage **116.** A different example will now be described, in which the system has the intelligence to connect directly to the edge devices when the client's connection with the VMS is lost.

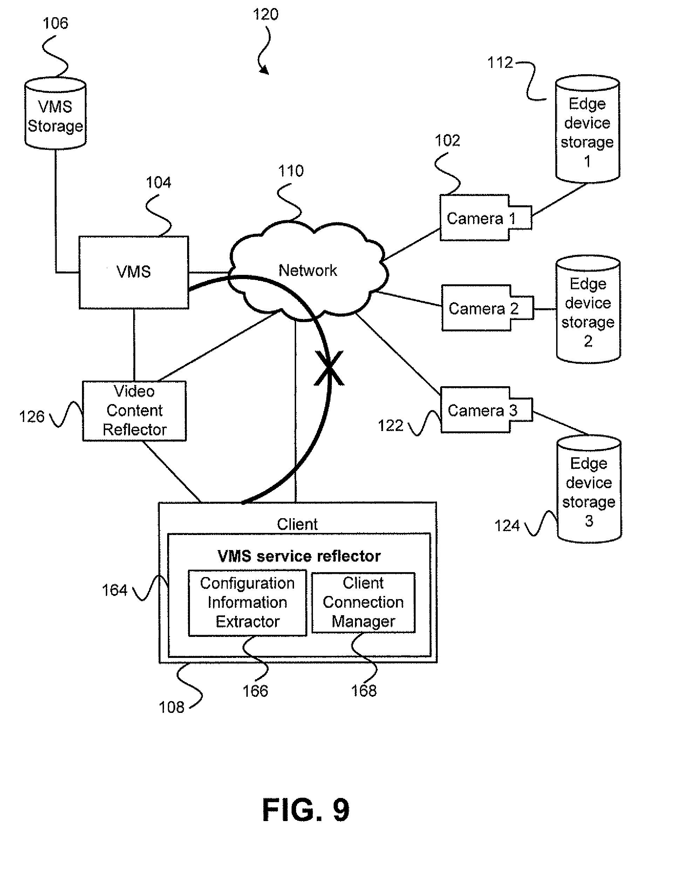

Figure **9** illustrates content management in a video surveillance system in response to unavailability of a VMS, such as due to a loss of a connection between a VMS and a client, according to an embodiment of the present disclosure. When a VMS-client connection is interrupted, the client **108** loses all information being provided by the VMS **104.** The loss of connection can occur at any point on the connection path between the VMS and the client. If the VMS **104** loses the connection to the client **108,** then the client that is connected to the VMS can automatically detect or understand that the connection to the VMS is lost. This can be achieved by way of a VMS service reflector **164**.

The VMS service reflector **164** is in communication with the client **108** and with the VMS **104** and with the plurality of edge devices **102.** The VMS service reflector **164** is arranged to reflect, to the client **108,** services provided by the VMS when the VMS is unavailable, the VMS service reflection being performed by way of direct connection to the plurality of edge devices. For example, according to an embodiment of the present disclosure, the VMS service reflector **164** can automatically map, using direct connections, to the resources that it was receiving through the VMS-client connection.

In the embodiment shown in Figure **9****,** the VMS content reflector **164** is provided integral with the client **108.** In another embodiment, the VMS content reflector **164** can be provided anywhere in the system, as long as it is in communication with the client **108** and the plurality of edge devices **102** at all times. The VMS content reflector **164** is also in communication with the VMS **104** long enough to obtain information needed to connect directly to the plurality of edge devices **102** when the connection to the VMS **104** is unavailable. This also applies when the connection to the VMS **104** is available, but for some reason the VMS **104** itself is unavailable, such as due to a failure or malfunction.

As shown in Figure **9****,** the VMS service reflector can include a configuration information extractor **166** and a client connection manager **168.** The configuration information extractor **166** is arranged to obtain configuration information from the VMS regarding the plurality of edge devices managed by the VMS. The client connection manager **168** is arranged to transparently connect the client directly to the plurality of edge devices based on the obtained configuration information. The client connection manager **168** can transparently connect the client directly to the plurality of edge devices based on the obtained configuration information in response to receipt of an indication of a loss of a connection along a VMS-client connection path.

The VMS service reflector **164,** for the duration of unavailability of the VMS, can be arranged to: provide VMS functionality through an existing VMS interface via the direct edge device connections in a manner that is transparent to the client; to disconnect the direct edge device connections in response to receiving an indication of re-establishment of the client connection; and to maintain the VMS functionality transparently to the client through the loss and re-establishment of the client connection.

For example, suppose the VMS **104** is connected to a number of resources including camera 1, camera 2 and camera 3. When the client 108 connects to the VMS **104,** the client uses the IP address of the VMS. The VMS then provides a list of resources that are currently managed by the VMS. If the client wants to view the camera 1 output, the VMS obtains the camera 1 video and provides it to the client, with the VMS acting as a type of proxy. The VMS also stores the IP address of the connected resources. This information is available to the client, and can be downloaded by the client according to an embodiment of the present disclosure. When the client loses the connection to the VMS, the client knows that the VMS was connected to certain IP addresses.

Consequently, instead of having a single connection to the VMS to manage all of the edge devices, the client can open a number of direct connections to all of the edge devices that were managed by the VMS, in response to loss of connection between the client and the VMS. This provides redundancy and fault tolerance in a video surveillance system. This system enables the client to see live or playback video for every camera, even if connection to the VMS is lost. When the connection between the client and the VMS can be re-established, the client will detect re-establishment of the connection, disconnect the direct connections to the edge devices, and connect to the VMS.

In this example, it is the client, by means of the VMS service reflector **164,** that has the intelligence to connect directly to the edge devices when the client's connection with the VMS is lost. In the previous example where the connection between the camera and the VMS is lost, the VMS has the intelligence to transparently provide access to the edge device storage.

In one embodiment, a connection is automatically established between the client and the edge device in the case of loss of connection from the client to the VMS. This is done transparently to the user, without any manual user configuration or intervention. It is also done without any substantial interruption in service from the perspective of the user/client. The direct connection to the edge device may have somewhat lower performance than the VMS connection, because the VMS has very good routing performance and very good proxy performance. However, this arrangement provides fault tolerance and maintains service when the connection between the client and the VMS is lost.

Automatic connection of the client to an edge device can be performed in the following manner. When the client is connected to VMS, it is connected using a single socket connection on which all data from cameras and edge devices under its control is multiplexed. When the client connects to the VMS, it can request all of the configuration information for each of the edge devices under the control of the VMS, such as at a particular site. This receipt of configuration information can be done in real time, on a peer-to-peer basis. The configuration information can include camera name and/or camera type (for example, dome, fixed, PTZ). In response to an indication or determination that configuration information is changed in the VMS, the client can request and acquire the changed configuration information and download the changed configuration information locally to the client.

The client also receives the addresses of the edge devices. If the connection between the client and VMS is dropped, the client detects loss of the connection, and connects automatically to each edge device that supports shadow archiving. Therefore, the user does not see any interruption in service, and may not even be aware that the connection was lost, unless the system provides an indication to that effect.

In a system according to an embodiment of the present disclosure, the client can detect when there is a loss of connection between the client and the VMS. Whenever the connection is lost, the client automatically routes to the IP address of the edge device to establish a direct connection to the edge device. In this way, the system provides the client access to the video data from the edge device even when a connection between the client and the VMS is lost. When the client detects that the connection between the client and the VMS is re-established, the client will close the direct connections between the client and the edge devices, and provide the user with access to the edge device video via the VMS.

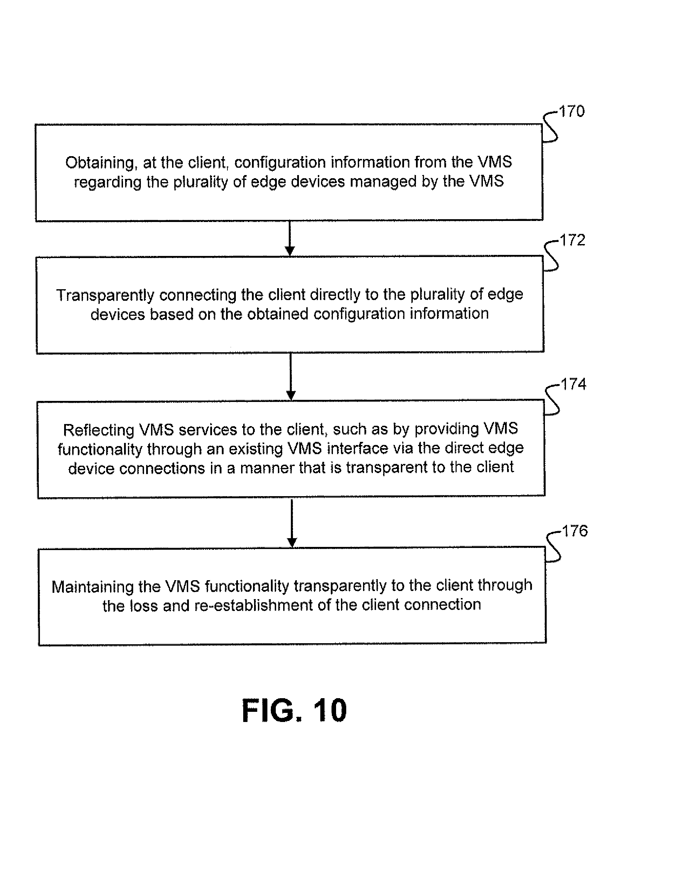

Figure **10** illustrates a method of implementing content management in a video surveillance system according to an embodiment of the present disclosure. The system includes a VMS having VMS storage, a plurality of edge devices each having associated therewith an edge device storage, and a client. The method includes the following steps: obtaining, at the client, configuration information from the VMS regarding the plurality of edge devices managed by the VMS (step **170);** transparently connecting the client directly to the plurality of edge devices based on the obtained configuration information (step **172);** reflecting VMS services to the client, such as by providing VMS functionality through an existing VMS interface via the direct edge device connections in a manner that is transparent to the client (step **174);** and maintaining the VMS functionality transparently to the client through the loss and re-establishment of the client connection (step **176).**

In the preceding description, for purposes of explanation, numerous details are set forth in order to provide a thorough understanding of the embodiments described herein. However, it will be apparent to one skilled in the art that these specific details are not required in order to practice the embodiments. In other instances, well-known electrical structures and circuits are shown in block diagram form in order not to obscure the embodiments. For example, specific details are not provided as to whether the embodiments described herein are implemented as a software routine, hardware circuit, firmware, or a combination thereof.

Embodiments described herein can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or nonvolatile), or similar storage mechanism. The machine-readable medium can contain various sets of instructions, code sequences, configuration information, or other data, which, when executed, cause a processor to perform steps in a method according to an embodiment described herein. Those of ordinary skill in the art will appreciate that other instructions and operations necessary to implement the described embodiments can also be stored on the machine-readable medium. Software running from the machine-readable medium can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A video surveillance system, comprising:
a plurality of edge devices;
a virtual management server (VMS) in communication with the plurality of edge devices;
a VMS storage, in communication with the VMS, providing local storage to the VMS;
the VMS arranged to record, in the VMS storage, video captured at a selected edge device, the selected edge device being in the plurality of edge devices;
a selected edge device storage associated with the selected edge device, the selected edge device configured to record, on the selected edge device storage, video captured at the selected edge device; and
a video content reflector arranged to provide, to a client, transparent access via the VMS to video content on the selected edge device storage without transferring the video content from the selected edge device storage to the VMS storage.

2. The system of claim 1 wherein the video content reflector is integral with the VMS.

3. The system of claim 1 wherein the video content reflector is arranged to provide transparent access to the video content on the selected edge device storage via a VMS interface associated with the VMS.

4. The system of claim 1 wherein the video content reflector is integral with the selected edge device.

5. The system of claim 1 wherein the video content reflector is integral with the one of the plurality of edge devices.

6. The system of claim 1 further comprising:
a VMS service reflector, in communication with the client and with the VMS and with the plurality of edge devices, the VMS service reflector arranged to reflect, to the client, services provided by the VMS when the VMS is unavailable, the VMS service reflection being performed by way of direct connection to the plurality of edge devices.

7. The system of claim 6 wherein the VMS service reflector comprises:
a configuration information extractor arranged to obtain configuration information from the VMS regarding the plurality of edge devices managed by the VMS; and
a client connection manager arranged to transparently connect the client directly to the plurality of edge devices based on the obtained configuration information.

8. The system of claim 7 wherein the client connection manager transparently connects the client directly to the plurality of edge devices based on the obtained configuration information in response to receipt of an indication of a loss of a connection along a VMS-client connection path.

9. The system of claim 7 wherein the VMS service reflector, for the duration of unavailability of the VMS, is arranged to provide VMS functionality through the existing VMS interface via the direct edge device connections in a manner that is transparent to the client, to disconnect the direct edge device connections in response to receiving an indication of re-establishment of the client connection, and to maintain the VMS functionality transparently to the client through the loss and re-establishment of the client connection.

10. The system of claim 6 wherein the VMS service reflector is integral with the client.

11. The system of claim 6 wherein the video content reflector is a primary video content reflector, and further comprising a secondary video content reflector arranged to provide, to the client, transparent access via the VMS to video content on the selected edge device storage without transferring the video content from the selected edge device storage to the VMS storage and in the case of failure of the primary video content reflector.

12. A method of implementing content management in a video surveillance system, the system including a video management server (VMS) having VMS storage, a plurality of edge devices each having associated therewith an edge device storage, and a client, the method comprising:
recording video captured at a selected edge device in the plurality of edge devices on a the VMS storage;
recording video captured at the selected edge device on a selected edge device storage,
the selected edge device storage being associated with the selected edge device; and
providing, to the client, transparent access via the VMS to video content of the selected edge device storage without transferring the video content from the edge device storage to the VMS storage.

13. The method of claim 12 further comprising:
obtaining, at the client, configuration information from the VMS regarding the plurality of edge devices managed by the VMS;
receiving an indication of a loss of a client connection along a connection path between the VMS and the client;
in response to the received indication of the loss of the client connection, transparently connecting the client directly to the plurality of edge devices based on the obtained configuration information;
for the duration of the loss of the client connection, providing VMS service reflection through an existing VMS interface via the direct edge device connections in a manner that is transparent to the client;
disconnecting the direct edge device connections in response to receiving an indication of re-establishment of the client connection; and
maintaining the VMS functionality transparently to the client through the loss and re-establishment of the client connection.

14. A method of implementing content management in a video surveillance system, the system including a video management server (VMS) having VMS storage, a plurality of edge devices each having associated therewith an edge device storage, and a client, the method comprising:
obtaining, at the client, configuration information from the VMS regarding the plurality of edge devices managed by the VMS;
transparently connecting the client directly to the plurality of edge devices based on the obtained configuration information;
providing VMS service reflection through an existing VMS interface via the direct edge device connections in a manner that is transparent to the client; and
maintaining the VMS functionality transparently to the client through the loss and re-establishment of the client connection.

15. A computer readable memory storing statements and instructions for execution by a processor to perform the method of implementing fault tolerance in the video surveillance system according to any one of claims 12 to 14.
